# EUROPEAN PATENT APPLICATION

(11) **EP 2 330 827 A2**
(43) Date of publication of application: **08.06.2011**
(21) Application number: 09814822.4
(22) Date of filing: 22.09.2009
(51) Int. Cl.: H04N 13/02

(54) **METHOD AND DEVICE FOR REALISING SENSORY EFFECTS**

(30) Priority: 22.09.2008 US 98844 P
(71) Applicant: Electronics and Telecommunications Research Institute, Daejeon-shi 305-350 (KR)
(72) Inventor: CHOI, Bum-Suk, Daejon 305-755 (KR); JOO, Sanghyun, Daejon 305-340 (KR); LEE, Hae-Ryong, Daejon 302-120 (KR); PARK, Seungsoon, Seoul 151-892 (KR); PARK, Kwang-Roh, Daejon 302-753 (KR)
(74) Representative: Betten & Resch
(86) International application number: PCT/KR2009/005393
(87) International publication number: WO 2010/033006

(57) **Abstract**

Provided is a method and apparatus for generating sensory media. The method includes: generating sensory effect metadata (SEM) for a sensory effect which is applied to media; and outputting the SEM. The SEM includes sensory effect declaration information defining a sensory effect type other than a core sensory effect type and sensory effect representation information for representing the sensory effect.

## Description

### TECHNICAL FIELD

The present invention relates to a method and apparatus for representing sensory effects.

### BACKGROUND ART

In general, media includes audio and video. The audio may be voice or sound and the video may be a still image and a moving image. When a user consumes or reproduces media, a user uses metadata to obtain information about media. Here, the metadata is data about media. Meanwhile, a device for reproducing media has been advanced from devices reproducing media recorded in an analog format to devices reproducing media recorded in a digital format.

An audio output device such as speakers and a video output device such as a display device have been used to reproduce media.

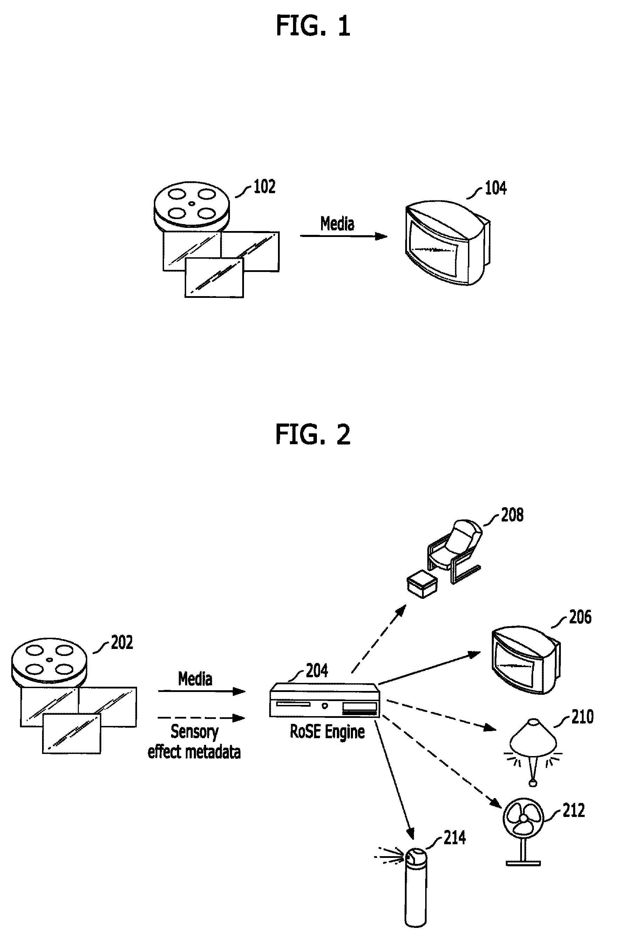

Fig. 1 is a diagram for schematically describing a media technology according to the related art. As shown in Fig. 1, media is outputted to a user using a media reproducing device 104. The media reproducing device 104 according to the related art include only devices for outputting audio and video. Such a conventional service is referred as a single media single device (SMSD) based service in which one media is reproduced through one device.

Meanwhile, audio and video technologies have been advanced to effectively provide media to a user. For example, an audio technology has been developed to process an audio signal to a multi-channel signal or a multi-object signal or a display technology also has been advanced to process video to a high quality video, a stereoscopic video, and a three dimensional image.

Related to a media technology, a moving picture experts group (MPEG) has introduced MPEG-1, MPEG-2, MPEG-4, MPEG-7, and MPEG-21 and has developed new media concept and multimedia processing technology. MPEG-1 defines a formation for storing audio and video and MPEG-2 defines specification about audio transmission. MPEG-4 defines an object-based media structure. MPEG-7 defines specification about metadata related to media, and MPEG-21 defines media distribution framework technology.

Although realistic experiences can be provided to a user through 3-D audio/video devices due to the development of the media technology, it is very difficult to realize sensory effects only with audio/video devices and media.

### DISCLOSURE

### TECHNICAL PROBLEM

An embodiment of the present invention is directed to providing a method and apparatus for representing sensory effects in order to maximize media reproducing effects by realizing sensory effects when media is reproduced.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### TECHNICAL SOLUTION

In accordance with an aspect of the present invention, there is provided a method for generating sensory media, including: generating sensory effect, metadata (SEM) for a sensory effect which is applied to media; and outputting the SEM. The SEM includes sensory effect declaration information defining a sensory effect type other than a core sensory effect type and sensory effect representation information for representing the sensory effect.

In accordance with another aspect of the present invention, there is provided an apparatus for generating sensory media, including: a metadata generating unit configured to generate SEM for a sensory effect which is applied to media; and an output unit configured to output the SEM. The SEM includes sensory effect declaration information defining a sensory effect type other than a core sensory effect type and sensory effect representation information, for representing the sensory effect.

In accordance with another aspect of the present invention, there is provided method for representing sensory media, including: receiving SEM for a sensory effect which is applied to media; and acquiring information on the sensory effect by using the SEM, and controlling a sensory device to represent the sensory effect. The SEM includes sensory effect declaration information defining a sensory effect type other than a core sensory effect type and sensory effect representation information, for representing the sensory effect.

In accordance with another aspect of the present invention, there is provided an apparatus for representing sensory media, including: an input unit configured to receive SEM for a sensory effect which is applied to media; and a control unit configured to acquire information on the sensory effect using the SEM, and control a sensory device to represent the sensory effect. The SEM includes sensory effect declaration information defining a sensory effect type other than a core sensory effect type and sensory effect representation information for representing the sensory effect.

### ADVANTAGEOUS EFFECTS

A method and apparatus for reproducing sensory effects can maximize media reproducing effects by realizing sensory effects when media is reproduced.

### BRIEF DESCRIPTION OF THE DRAWINGS

Fig. 1 is a schematic diagram illustrating a media technology according to the related art.

Fig. 2 is a conceptual diagram illustrating realizing sensor effect media in accordance with an embodiment of the present invention.

Fig. 3 is a diagram illustrating a single media multiple device (SMMD) system for representing sensory effects in accordance with an embodiment of the present invention.

Fig. 4 is a diagram illustrating a sensory media generator in accordance with an embodiment of the present invention.

Fig. 5 is a block diagram illustrating an apparatus for representing sensory effects in accordance with an embodiment of the present invention.

Fig. 6 is block diagram illustrating an apparatus for providing sensory device capability information in accordance with an embodiment of the present invention.

Fig. 7 is a block diagram illustrating an apparatus for providing user sensory preference information in accordance with an embodiment of the present invention.

Fig. 8 is a diagram explaining the configuration of SEM in accordance with an embodiment of the present invention.

Fig. 9 shows an example of schema for the SEM in accordance with the embodiment of the present invention.

Fig. 10 shows an example of schema for a group effect type in accordance with the embodiment of the present invention.

Fig. 11 shows an example of schema for an effect base type in accordance with the embodiment of the present invention.

Fig. 12 shows an example of schema for a single effect type in accordance with the embodiment of the present invention.

Fig. 13 shows an example of schema for a reference effect type in accordance with the embodiment of the present invention.

Fig. 14 shows an example of a sensory effect declaration information element in accordance with the embodiment of the present invention.

Fig. 15 shows an example of a sensory effect representation information element in accordance with the embodiment of the present invention.

Fig. 16 shows an example of schema for a light effect.

Fig. 17 shows an example of schema for a temperature effect.

Fig. 18 shows an example of schema for a wind effect.

Fig. 19 shows an example of schema for a vibration effect.

Fig. 20 shows an example of schema for a tilt effect.

Fig. 21 shows an example of schema for a diffusion effect.

Fig. 22 shows an example of schema for a shading effect.

Fig. 23 shows an example of schema for an external device effect.

Fig. 24 shows an example of schema for a high level reference effect.

Fig. 25 shows an example of the light effect type for a flash effect in accordance with the embodiment of the present invention.

Fig. 26 shows an example of the tilt effect type for representing a motion effect (for example, rocking chair).

### BEST MODE FOR THE INVENTION

The advantages, features and aspects of the invention will become apparent from the following description of the embodiments with reference to the accompanying drawings, which is set forth Hereafter. In addition, if further detailed description on the related prior arts is determined to obscure the point of the present invention, the description is omitted. Hereafter, preferred embodiments of the present invention will be described in detail with reference to the drawings. The same reference numeral is given to the same element, although the element appears in different drawings.

Conventionally, audio and video are only objects of media generation and consumption such as reproducing. However, human has not only visual and auditory senses but also olfactory and tactile senses. Lately, many studies have been made to develop a device stimulating all of the five senses of human.

Meanwhile, home appliances controlled by an analog signal have been advanced to home appliances controlled by a digital signal.

Media has been limited as audio and video only. The concept of media limited as audio and video may be expanded by controlling devices that stimulate other senses such as olfactory or tactile sense with media incorporated. That is, a media service has been a single media single device (SMSD) based service in which one media is reproduced by one device. However, in order to maximize media reproducing effect in ubiquitous home, a single media multi device (SMMD) based service may be realized. The SMMD based service reproduces one media through multiple devices.

Therefore, it is necessary to advance a media technology for reproducing media to simply watch and listen to a sensory effect type media technology for representing sensory effects with media reproduced in order to satisfy five senses of human. Such a sensory effect type media may extend a media industry and a market of sensory effect devices and provide rich experience to a user by maximizing media reproducing effect. Therefore, a sensory effect type media may promote the consumption of media.

Fig. 2 is a diagram illustrating realization of sensory effect media in accordance with an embodiment of the present invention.

Referring to Fig. 2, media 202 and sensory effect metadata are input to an apparatus for representing sensory effects. Here, the apparatus for representing sensory effects is also referred as a representation of sensory effect engine (RoSE Engine) 204. Here, the media 202 and the sensory effect metadata may be input to the representation of sensory effect engine (RoSE Engine) 204 by independent providers. For example, a media provider (not shown) may provide media 202 and a sensory effect provider (not shown) may provide the sensory effects metadata.

The media 202 includes audio and video, and the sensory effect metadata includes sensory effect information for representing or realizing sensory effects of media 202. The sensory effect metadata may include all information for maximizing reproducing effects of media 202. Fig. 2 exemplarily shows visual sense, olfactory sense, and tactile sense as sensory effects. Therefore, sensory effect information includes visual sense effect information, olfactory sense effect information, and tactile sense effect information.

The RoSE engine 204 receives media 202 and controls a media output device 206 to reproduce the media 202. The RoSE engine 204 controls sensory effect devices 208, 210, 212, and 214 using visual effect information, olfactory effect information, and tactile effect information included in sensory effect metadata. Particularly, the RoSE engine 204 controls lights 210 using the visual effect information, controls a scent device 214 using the olfactory effect information, and controls a trembling chair 208 and a fan 212 using the tactile effect information.

For example, when video including a scene of lightning or thunder is reproduced, lights 210 are controlled to be turned on and off. When video including a scene of foods or a field is reproduced, the scent device 214 is controlled. Further, when video including a scene of water rafting or car chasing is reproduced, the trembling chair 208 and the fan 212 are controlled. Accordingly, sensory effects can be realized corresponding to scenes of video while reproducing.

In order to realize sensory effects, it is necessary to define a schema to express sensory effect information such as intensity of wind, color of light, and intensity of vibration in a standard format. Such a standardized schema for sensory effect information is referred as sensory effect metadata (SEM). When the sensory effect metadata is input to the RoSE engine 204 with the media 202, the RoSE engine 204 analyzes the sensory effect metadata that is described to realize sensory effects at predetermined times while reproducing the media 202. Further, the RoSE engine 204 controls sensory effect devices with being synchronized with the media 202.

The RoSE engine 204 needs to have information about various sensory devices in advance for representing sensory effects. Therefore, it is necessary to define metadata for expressing information about sensory effect devices. Such metadata is referred to as a sensory device capability metadata (SDCap). The sensory device capability metadata includes information about positions, directions, and capabilities of sensory devices.

A user who wants to reproduce media 202 may have various preferences for specific sensory effects. Such a preference may influence representation of sensory effects. For example, a user may not like a red color light. Or, when a user wants to reproduce media 202 in the middle of night, the user may want a dim lighting and a low sound volume. By expressing such preferences of a user about predetermined sensory effects as metadata, various sensory effects may be provided to a user. Such metadata is referred to as user sensory preference metadata (USP).

Before representing sensory effects, the RoSE engine 204 receives sensory effect capability metadata from each of sensory effect devices and user sensory preference metadata through an input device or from sensory effect devices. The RoSE engine 204 controls sensory effect devices with reference to the sensory effect capability metadata and the user sensory preference metadata USP. Such a control command is transferred to each of the sensory devices in a form of metadata. The metadata is referred to as a sensory device command metadata (SDCmd).

Hereafter, a method and apparatus for representing sensory effects in accordance with an embodiment of the present invention will be described in detail.

### <Definitions of Terms>

1. Provider

The provider is an object that provides sensory effect metadata. The provider may also provide media related to the sensory effect metadata.

For example, the provider may be a broadcasting service provider.

2. Representation of Sensory Effect (RoSE) Engine

The RoSE engine is an object that receives sensory effect metadata, sensory device capabilities metadata, and user sensory preference metadata, and generates sensory device commands metadata based on the received metadata.

3. Consumer devices

The consumer device is an object that receives sensory device command metadata and provides sensory device capabilities metadata. Also, the consumer device may be an object that provides user sensory preference metadata. The sensory devices are a sub-set of the consumer devices.

For example, the consumer device may be fans, lights, scent devices, and human input devices such as a television set with a remote controller.

4. Sensory effects

The sensory effects are effects that augment perception by stimulating senses of human at a predetermined scene of multimedia application.

For example, the sensory effects may be smell, wind, and light.

5. Sensory effect metadata (SEM)

The sensory effect metadata (SEM) defines description schemes and descriptors for representing sensory effects

6. Sensory effect delivery format

The sensory effect delivery format defines means for transmitting the sensory effect metadata (SEM).

For example, the sensory effect delivery format may include a MPEG2-TS payload format, a file format, and a RTP payload format.

7. Sensory devices

The sensory devices are consumer devices for producing corresponding sensory effects.

For example, the sensory devices may include light, fans, and heater.

8. Sensory device capability

The sensory device capability defines description schemes and descriptors for representing properties of sensory devices.

For example, the sensory device capability may include an extensible markup language (XML) schema.

9. Sensory device capability delivery format

The sensory device capability delivery format defines means for transmitting sensory device capability.

For example, the sensory device capability delivery format may include hypertext transfer protocol (HTTP), and universal plug and play (UPnP).

10. Sensory device command

The sensory device command defines description schemes and descriptors for controlling sensory devices.

For example, the sensory device command may include an XML schema.

11. Sensory device command delivery format

The sensory device command delivery format defines means for transmitting the sensory device command.

For example, the sensory device command delivery format may include HTTP and UPnP.

12. User sensory preference

The user sensory preference defines description schemes and descriptors for representing user preferences about sensory effects related to rendering sensory effects.

For example, the user sensory preference may include an XML schema.

13. User sensory preference delivery format

The user sensory preference delivery format defines means for transmitting user sensory preference.

For example, the user sensory preference delivery format include be HTTP and UPnP.

### <System for representing sensory effects>

Hereafter, an overall structure and operation of a system for representing sensory effects in accordance with an embodiment of the present invention will be described in detail.

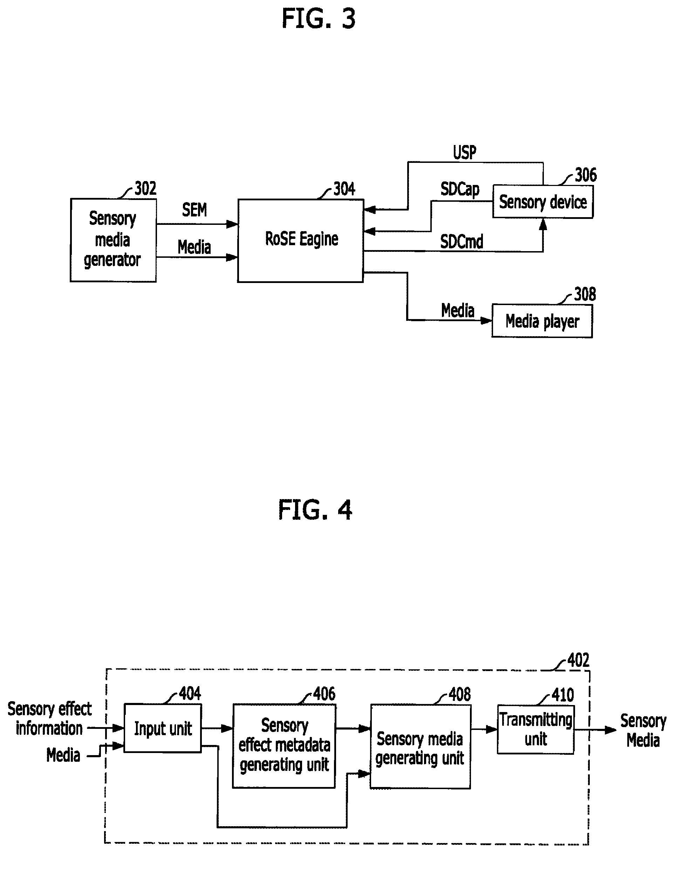

Fig. 3 is a diagram illustrating a single media multiple device (SMMD) system for representing sensory effects in accordance with an embodiment of the present invention.

Referring to Fig. 3, the SMMD system in accordance with the embodiment of the present embodiment includes a sensory media generator 302, a representation of sensory effects (RoSE) engine 304, a sensory device 306, and a media player 308.

The sensory media generator 302 receives sensory effect information about sensory effects applied to media and generates sensory effect metadata (SEM) including the received sensory effect information. Then, the sensory media generator 302 transmits the generated sensory effect metadata to the RoSE engine 304. Here, the sensory media generator 302 may transmit media with the sensory effect metadata.

Although it is not shown in Fig. 3, a sensory media generator 302 according to another embodiment may transmit only sensory effect metadata. Media may be transmitted to the RoSE engine 304 or the media player 308 through additional devices. The sensory media generator 302 generates sensory media by packaging the generated sensory effect metadata with the media and may transmit the generated sensory media to the RoSE engine 304.

The RoSE engine 304 receives sensory effect metadata including sensory effect information about sensory effects applied to media and obtains sensory effect information by analyzing the received sensory effect metadata. The RoSE engine 304 controls the sensory device 306 of a user in order to represent sensory effects while reproducing media using the obtained sensory effect information. In order to control the sensory devices 306, the RoSE engine 304 generates the sensory device command metadata (SDCmd) and transmits the generated sensory device command metadata to the sensory device 306. In Fig. 3, one sensory device 306 is shown for convenience. However, a user may possess a plurality of sensory devices.

In order to generate the sensory device command metadata, the RoSE engine 304 needs information about capabilities of each sensory device 306. Therefore, before generating the sensory device command metadata, the RoSE engine 304 receives sensory device capability metadata (SDCap) that includes the information about capabilities of sensory devices 306. The RoSE engine 304 obtains information about states and capabilities of each sensory device 306 from the sensory device capability metadata. The RoSE engine 304 generates sensory device command metadata for realizing sensory effects that can be realized by each of sensory devices using the obtained information. Here, the controlling the sensory devices include synchronizing the sensory devices with scenes that are reproduced by the media player 308.

In order to control the sensory device 306, the RoSE engine 304 and the sensory device 306 may be connected through networks. Particularly, LonWorks or Universal Plug and Play technologies may be applied as the network technology. In order to effectively provide media, media technologies such as MPEG including MPEG-7 and MPEG-21 may be applied together.

A user having the sensory device 306 and the media player 308 may have various preferences about predetermined sensory effects. For example, the user may dislike a predetermined color or may want strong vibration. Such user preference information may be input through the sensory device 306 or an additional input terminal (not shown). Further, the user preference information may be generated in a form of metadata. Such metadata is referred to as user sensory preference metadata USP. The generated user sensory preference metadata is transmitted to the RoSE engine 304 through the sensory device 306 or the input terminal (not shown). The RoSE engine 304 may generate sensory device command metadata in consideration of the received user sensory preference metadata.

The sensory device 306 is a device for realizing sensory effects applies to media. Particularly, the sensory device 306 include exemplary devices as follows. However, the present invention is not limited thereto.

- visual device: monitor, TV, wall screen.

- sound device: speaker, music instrument, and bell

- wind device: fan, and wind injector.

- temperature device: heater and cooler

- lighting device: light, dimmer, color LED, and flash

- shading device: curtain, roll screen, and door

- vibration device: trembling chair, joy stick, and tickler

- scent device: perfumer

- diffusion device: sprayer

- other device: devices that produce undefined effects and combination of the above devices

A user may have more than one of sensory devices 306. The sensory devices 306 receive the sensory device command metadata from the RoSE engine 304 and realize sensory effects defined in each scene by synchronizing it with the media.

The media player 308 is a device for reproducing media, such as TV. Since the media player 308 is a kind of device for representing video and audio, the media reproduce 308 may be included in the sensory device 306. In Fig. 3, however, the media player 308 is independently shown for convenience. The media player 308 receives media from the RoSE engine 304 or through additional path and reproduces the received media .

### <Method and apparatus for generating sensory media>

Hereafter, a method and apparatus for generating sensory media in accordance with an embodiment of the present invention will be described in detail.

The method for generating sensory media in accordance with the embodiment of the present embodiment includes receiving sensory effect information about sensory effects applied to media; and generating sensory effect metadata including the sensory effect information. The sensory effect metadata includes sensory effect description information. The sensory effect description information includes media location information. The media location information describes about locations in media where sensory effects are applied to.

The method for generating sensory media in accordance with the embodiment of the present embodiment further includes transmitting the generated sensory effect metadata to a RoSE engine. The sensory effect metadata may be transmitted as independent data separated from media. For example, when a user requests a movie service, a provider may transmit sensory effect metadata with media data (movie). If a user already has a predetermined media data (movie), a provider may transmit only corresponding sensory effect data applied to the media data.

The method for generating sensory media according to the present invention further includes generating sensory media by packaging the generated sensory effect metadata with media and transmitting the generated sensory media. A provider may generate sensory effect metadata for media, generate sensory media by combining or packaging the generated sensory effect metadata with media, and transmit the generated sensory media to the RoSE engine. The sensory media may be formed of files in a sensory media format for representing sensory effects. The sensory media format may be a file format to be defined as a standard for representing sensory effects.

In the method for generating sensory media in accordance with the embodiment of the present embodiment, the sensory effect metadata includes sensory effect description information that describes sensory effects. The sensory effect metadata further includes general information about generation of metadata. The sensory effect description information includes media location information that shows locations in media where the sensory effects are applied to. The sensory effect description information further includes sensory effect segment information about segments of media. The sensory effect segment information may include effect list information about sensory effects to be applied to segments in media, effect variable information, and segment location information representing locations where sensory effects are applied to. The effect variable information may include sensory effect fragment information containing at least one of sensory effect variables that are applied at the same time.

Fig. 4 is a diagram illustrating a sensory media generator in accordance with an embodiment of the present invention.

Referring to Fig. 4, the sensory media generator 402 includes an input unit 404 for receiving sensory effect information about sensory effects applied to media, and a sensory effect metadata generating unit 406 for generating sensory effect metadata including sensory effect information. The sensory effect metadata includes sensory effect description information that describes sensory effects. The sensory effect description information includes media location information that represents locations in media where sensory effects are applied to. The sensory media generator 402 further includes a transmitting unit 410 for transmitting sensory effect metadata to a RoSE engine. Here, the media may be input through the input unit 404 and transmitted to the RoSE engine or a media player through the transmitting unit 410. Alternatively, the media may be transmitted to the RoSE engine or the media player through an additional path without passing through the input unit 404.

Meanwhile, the sensory media generator 402 may further include a sensory media generating unit 408 for generating sensory media by packaging the generated sensory effect metadata with media. The transmitting unit 410 may transmit the sensory media to the RoSE engine. When the sensory media is generated, the input unit 404 receives the media. The sensory media generating unit 408 generates sensory media by combining or packaging the input media from the input unit 404 with the sensory effect metadata generated from the sensory effect metadata generating unit 406.

The sensory effect metadata includes sensory effect description information that describes sensory effects. The sensory effect metadata may further include general information having information about generation of metadata. The sensory effect description information may include media location information that shows locations in media where sensory effects are applied to. The sensory effect description information may further include sensory effect segment information about segments of media. The sensory effect segment information may include effect list information about sensory effects applied to segments of media, effect variable information, and segment location information that shows locations in segments where sensory effects are applied to. The effect variable information includes sensory effect fragment information. The sensory effect fragment information includes at least one of sensory effect variables that are applied at the same time.

### <Method and apparatus for representing sensory effects>

Hereafter, a method and apparatus for representing sensory effects in accordance with an embodiment of the present invention will be described in detail.

The method for representing sensory effects in accordance with the embodiment of the present embodiment includes receiving sensory effect metadata including sensory effect information about sensory effects applied to media, obtaining the sensory effect information by analyzing sensory effect metadata; and generating sensory device command metadata to control sensory devices corresponding to the sensory effect information. The method for representing sensory effects in accordance with the embodiment of the present embodiment further includes transmitting the generated sensory effect command metadata to sensory devices. The sensory device command metadata includes sensory device command description information for controlling sensory devices.

The method for representing sensory effects in accordance with the embodiment of the present embodiment further includes receiving sensory device capability metadata. The receiving sensory device capability metadata may further include referring to capability information included in the sensory device capability metadata.

The method for representing sensory effects in accordance with the embodiment of the present embodiment may further include receiving user sensory preference metadata having preference information about predetermined sensory effects. The generating sensory device command metadata may further include referring to the preference information included in user sensory preference metadata.

In the method for representing sensory effects in accordance with the embodiment of the present embodiment, the sensory device command description information included in the sensory device command metadata may include device command general information that includes information about whether a switch of a sensory device is turned on or off, about a location to setup, and about a direction to setup. Further, the sensory device command description information may include device command detail information. The device command detail information includes detailed operation commands for sensory devices.

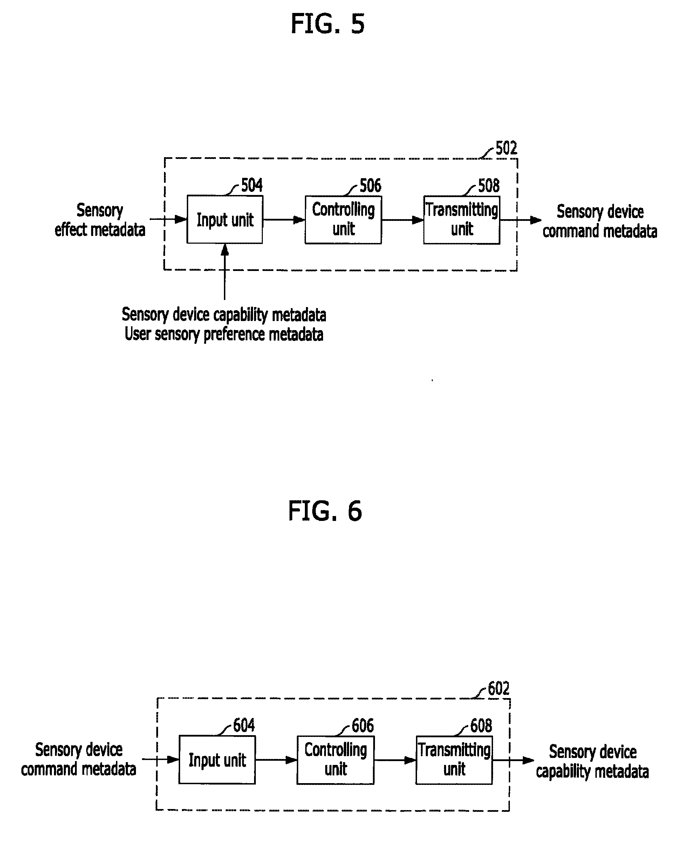

Fig. 5 is a block diagram illustrating an apparatus for representing sensory effects, which is referred to as a representation of sensory effects (RoSE) engine, in accordance with an embodiment of the present invention.

Referring to Fig. 5, the RoSE engine 502 in accordance with the embodiment of the present embodiment includes an input unit 504 for receiving sensory effect metadata having sensory effect information about sensory effects applied to media, and a controlling unit 506 for obtaining sensory effect information by analyzing the received sensory effect metadata and generating sensory effect command metadata to control sensory devices corresponding to the sensory effect information. The sensory device command metadata includes sensory device command description information to control sensory devices. The RoSE engine 502 may further include a transmitting unit 508 for transmitting the generated sensory device command metadata to sensory devices.

The input unit 504 may receive sensory device capability metadata that include capability information about capabilities of sensory devices. The controlling unit 506 may refer to the capability information included in the sensory device capability metadata to generate sensory device command metadata.

The input unit 504 may receive user sensory preference metadata that includes preference information about preferences of predetermined sensory effects. The controlling unit 506 may refer to the preference information included in the user sensory preference metadata to generate the sensory device command metadata.

the sensory device command description information included in the sensory device command metadata may include device command general information that includes information about whether a switch of a sensory device is turned on or off, about a location to setup, and about a direction to setup. The sensory device command description information may include device control detail information including detailed operation commands for each sensory device.

### <Method and apparatus for providing sensory device capability information>

Hereafter, a method and apparatus for providing sensory device capability information in accordance with an embodiment of the present invention will be described in detail.

The method for providing sensory device capability information in accordance with the embodiment of the present embodiment includes obtaining capability information about sensory devices; and generating sensory device capability metadata including the capability information. The sensory device capability metadata includes device capability information that describes capability information. The method for providing sensory device capability information in accordance with the embodiment of the present embodiment may further include transmitting the generated sensory device capability metadata to a RoSE engine.

Meanwhile, the method for providing sensory device capability information in accordance with the embodiment of the present embodiment may further include receiving sensory device command metadata from the RoSE engine and realizing sensory effects using the sensory device command metadata. The RoSE engine generates the sensory effect device command metadata by referring to the sensory device capability metadata.

In the method for providing sensory device capability information in accordance with the embodiment of the present embodiment, the device capability information included in the sensory device capability metadata may include device capability common information that include information about locations and directions of sensory devices. The device capability information includes device capability detail information that includes information about detailed capabilities of sensory devices.

Fig. 6 is block diagram illustrating an apparatus for providing sensory device capability information in accordance with an embodiment of the present invention.

The apparatus 602 for providing sensory device capability information may be a device having the same function of a sensory device or may be a sensory device itself. The apparatus 602 may be a stand-alone device independent from a sensory device.

As shown in Fig. 6, the apparatus 602 for providing sensory device capability information includes a controlling unit 606 for obtaining capability information about capabilities of sensory devices and generating the sensory device capability metadata including capability information. Here, the sensory device capability metadata includes device capability information that describes capability information. The apparatus 602 for providing sensory device capability information in accordance with the embodiment of the present embodiment further include a transmitting unit 608 for transmitting the generated sensory device capability metadata to the RoSE engine.

The apparatus 602 for providing sensory device capability information may further include an input unit 604 for receiving sensory device command metadata from the RoSE engine. The RoSE engine refers to the sensory device capability metadata to generate the sensory device command metadata. Here, the controlling unit 606 realizes sensory effects using the received sensory device control metadata.

Here, the device capability information included in the sensory device capability metadata may include device capability common information that includes information about locations and directions of sensory devices. The device capability information may include device capability detail information including information about detailed capabilities of sensory devices.

### <Method and apparatus for providing user preference information>

Hereafter, a method and apparatus for providing user preference information in accordance with an embodiment of the present invention will be described.

The method for providing user preference information in accordance with the embodiment of the present embodiment includes receiving preferences information about predetermined sensory effects from a user, generating user sensory preference metadata including the received preference information. The user sensory preference metadata includes personal preference information that describes preference information. The method for providing user sensory preference metadata in accordance with the embodiment of the present embodiment further includes transmitting the user sensory preference metadata to the RoSE engine.

The method for providing user sensory preference metadata in accordance with the embodiment of the present embodiment may further include receiving sensory device command metadata from a RoSE engine and realizing sensory effects using sensory device command metadata. Here, the RoSE engine refers to the received user sensory preference metadata to generate the sensory device command metadata.

In the method for providing user sensory preference metadata in accordance with the embodiment of the present embodiment, the preference information may include personal information for identifying a plurality of users and preference description information that describes sensory effect preference information of each user. The preference description information may include effect preference information including detailed parameters for at least one of sensory effects.

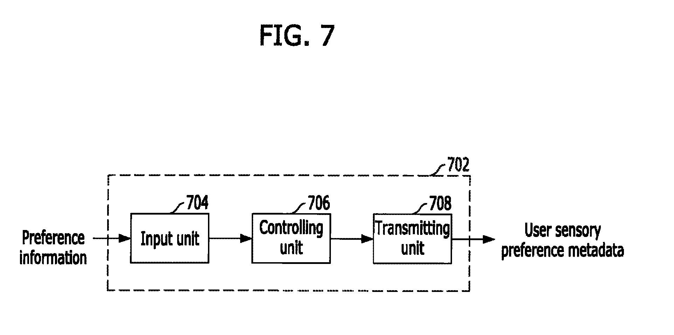

Fig. 7 is a block diagram illustrating an apparatus for providing user sensory preference information in accordance with an embodiment of the present invention.

The apparatus 702 for providing user sensory preference information in accordance with the embodiment of the present embodiment may be a device having the same function as a sensory device or a sensory device itself. Also, the apparatus 702 may be a stand-alone device independent from the sensory device.

As shown in Fig. 7, the apparatus 702 for providing user sensory preference information in accordance with the embodiment of the present embodiment includes an input unit 704 for receiving preference information about predetermined sensory effects from a user and a controlling unit 706 for generating user sensory preference metadata including the received preference information. The user sensory preference metadata includes personal preference information that describes the preference information. The apparatus 702 for providing user sensory preference information in accordance with the embodiment of the present embodiment may further include a transmitting unit 708 for transmitting the generated user sensory preference metadata to the RoSE engine.

The input unit 704 may receive sensory device command metadata from the ROSE engine. The RoSE engine refers to the user sensory preference metadata to generate the sensory device command metadata. The controlling unit 706 may realize sensory effects using the received sensory device command metadata.

The personal preference information included in the user sensory preference metadata includes personal information for identifying each of users and preference description information that describes sensory effect preference of each user. The preference description information may further include effect preference information including detailed parameters about at least one of sensory effects.

### <Sensory effect metadata>

Hereafter, the sensory effect metadata (SEM) will be described in detail.

The present invention proposes an XML schema for SEM in accordance with the M.2 step of core experiments for the RoSE. Furthermore, examples based the proposed schema will be also described. Main features of contents to be described below will be summarized as follow.

- Declaration and preference for sensory effect

A high level or low level effect is first declared, and then repetitively used. Such functionality reduces the repetition of description.

o 'Declaration' is a part for declaring a sensory effect (high level or low level effect).

o 'RefEffect' is a part for referring to a declared effect.

o 'Reference' is a part for referring to a sensory effect defined through 'Declaration' of external SEM or internal SEM. A set of predefined high level or low level effects may be used.

- Definition of EffectBaseType

The present invention defines an effect base type (EffectBaseType) including 11 attributes which are commonly used in all sensory effect types, such as 'intensity', 'position', and 'direction',

- Definition of core sensory effect

In the embodiment of the present invention, eight sensory effect types for core sensory effect vocabularies and reference effect types accompanied by the sensory effect types will be described. The types are derived from 'singleEffectType' and 'RefEffectType'.

Hereafter, the XML schema and semantics of the SEM will be described in detail.

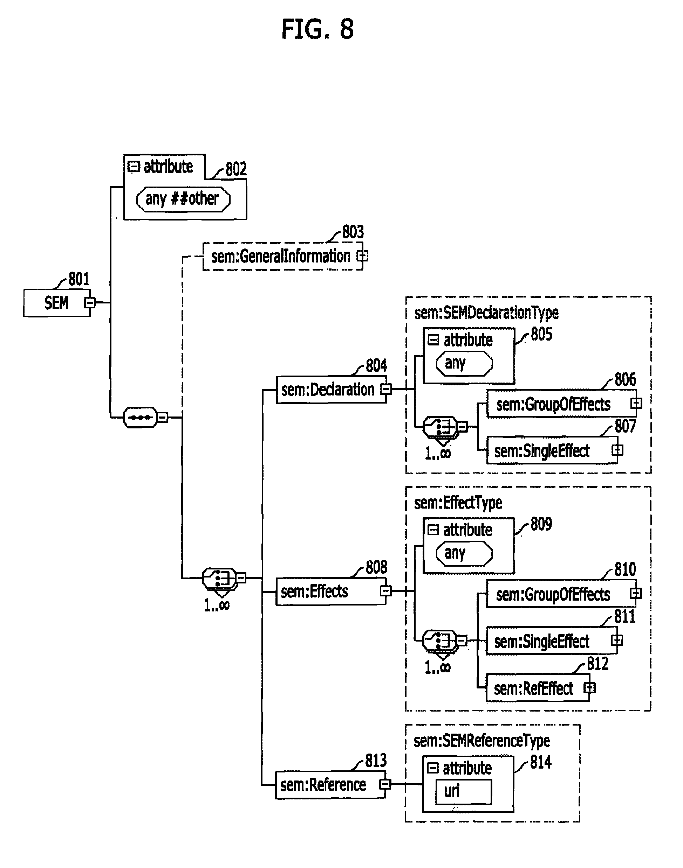

Fig. 8 is a diagram explaining the configuration of SEM in accordance with an embodiment of the present invention.

Referring to Fig. 8, the SEM 801 may include attribute information (attribute) 802, general information (GeneralInformation) 803, sensory effect declaration information (Declaration) 804, sensory effect representation information (Effect) 808, and reference information (Reference) 813. Declaration 804 may include attribute information (attribute) 805, group effect declaration information (GroupOfEffects) 806, and single effect declaration information (SingleEffect) 807. Effect 808 may include attribute information (attribute) 809, group effect representation information (GroupOfEffects) 810, single effect representation information (SingleEffect) 811, and reference effect representation information (RefEffect) 812. Table 1 summarizes the SEM 801.

**Table 1**

| Name | Definition |
|---|---|
| GeneralInformation | Describe general information about SEM. For example, generation information |
| Declaration | Describe declared effect. For example, explosion effect composed of wind, vibration, and sound |
| Effect | Describe sensory effect with time information. For example, light is turned on at 10000 pts. |
| Reference | Describe reference to external SEM. For example, reference to high level effect metadata set defined from outside |

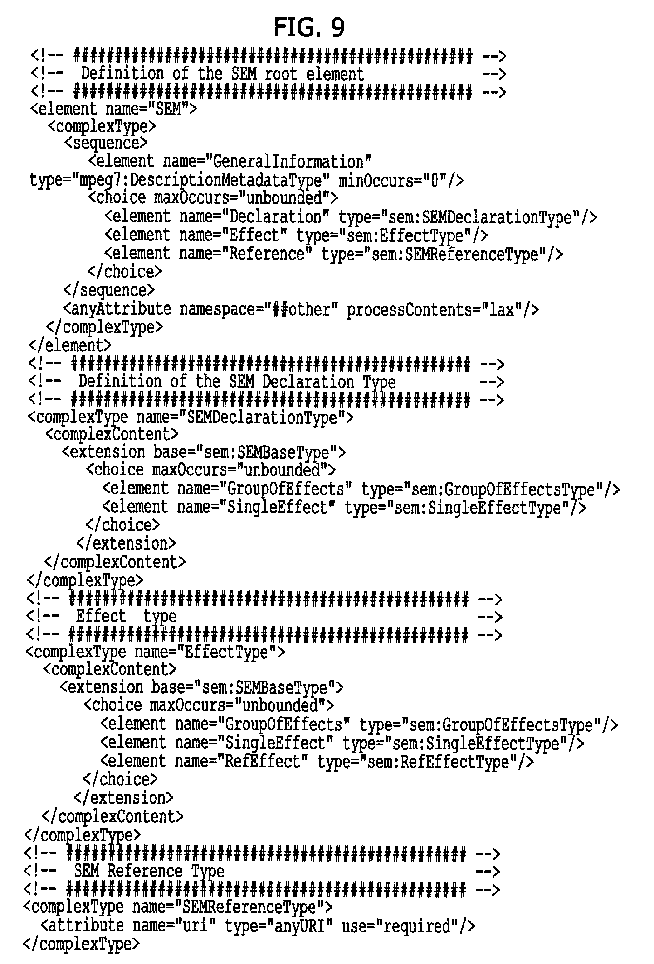

GeneralInformation 803 describes general information on SEM. Declaration 804 defines a sensory effect type, or specifically, a sensory effect type (group effect or single effects) other than the core sensory effect types. Effect 808 represents sensory effects defined by the core effect or Declaration 804 and describes the sensory effect with time information. Reference 813 refers to sensory effects defined in external or internal SEM. Fig. 9 shows an example of schema for the SEM in accordance with the embodiment of the present invention.

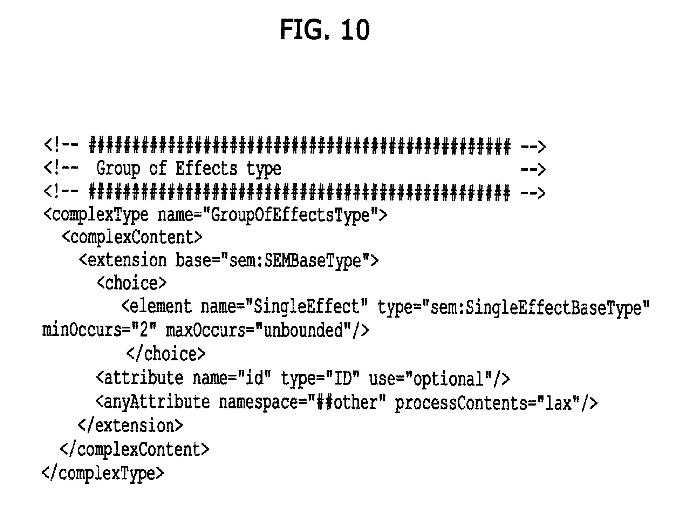

Fig. 10 shows an example of schema for the group effect type in accordance with the embodiment of the present invention. In Fig. 10, the schema of the group effect type includes identification information (id) for identifying a defined group effect type and one or more single effects. Table 2 summarizes the meanings of the vocabularies shown in Fig. 10.

**Table 2**

| Name | Definition |
|---|---|
| id | Identify GroupOfEffectsType |
| singleEffect | Describe single sensory effect |
| anyAttribute Allow | inclusion of attributes defined in namespace excluding target namespace |

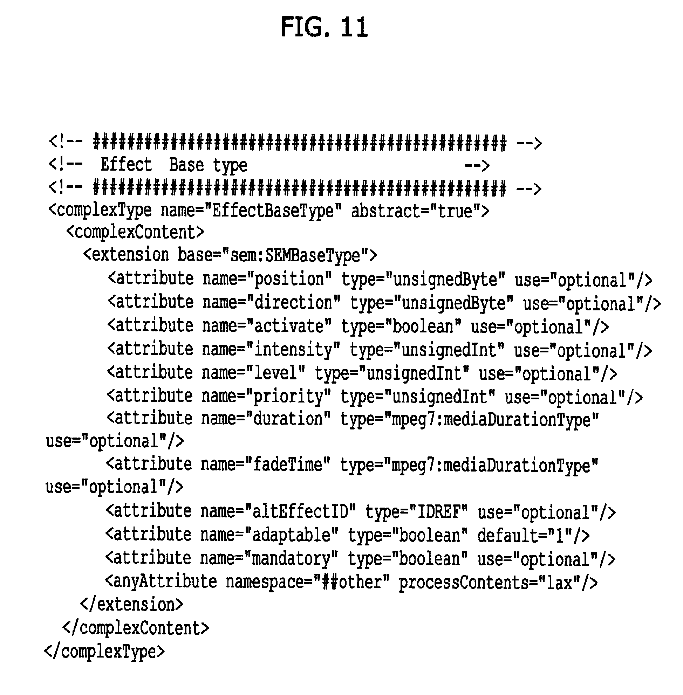

Fig. 11 shows an example of schema for the effect base type in accordance with the embodiment of the present invention. In Fig. 11, the effect base type defines position information (position), direction information (direction), activation information (activate), intensity information (intensity), level information (level), priority information (priority), duration information (duration), fading time information (fadeTime), alternative effect information (altEffectID), adaptability information (adaptable), mandatory information (mandatory), and other attribute information (anyAtrribute). Table 3 summarizes the meanings of the vocabularies shown in Fig. 11.

**Table 3**

| Name | Definition |
|---|---|
| position | Describe position of sensory effect. Available values are defined in Table 4. |
| direction | Describe direction of sensory effect. Available values are defined in Table 4. |
| activate | Describe whether or not to activate sensory effect. Available values are defined in Table 5. |
| intensity | Describe intensity of sensory effect by percentage. For example, 10%, 40%, 80%, ... |
| level | Describe intensity level of sensory effect. For example, level 1, level 3, ... |
| priority | Describe priority of sensory effect. |
| duration | Describe duration of sensory effect. |
| fadeTime | Describe fading time of sensory effect. |
| altEffectID | Refers to alternative sensory effect identifier (ID). For example, explosion effect may be substituted with earthquake effect. |
| adaptable | Describe adaptability of sensory effect. Available values are defined in Table 6. For example, sensory effect for airplane simulation requires absolute value without modification. |
| mandatory | Describe mandatory or optional sensory effect. Available values are defined in Table 7. For example, music video accompanying only light effect |
| anyAttribute | Allow inclusion of attributes defined in namespace excluding target namespace |

**Table 4**

| Value | Definition |
|---|---|
| 1 | Front |
| 2 | Right-Front |
| 3 | Right |
| 4 | Right-Rear |
| 5 | Rear |
| 6 | Left-Rear |
| 7 | Left |
| 8 | Left-Front |
| 9 | Above |
| 10 | Below |
| 11-64 | Reserved |

**Table 5**

| Value | Definition |
|---|---|
| 0 | Inactive |
| 1 | Active |

**Table 6**

| Value | Definition |
|---|---|
| 0 | Not allow adaptation |
| 1 | Allow adaptation |

**Table 7**

| Value | Definition |
|---|---|
| 0 | Optional |
| 1 | Mandatory |

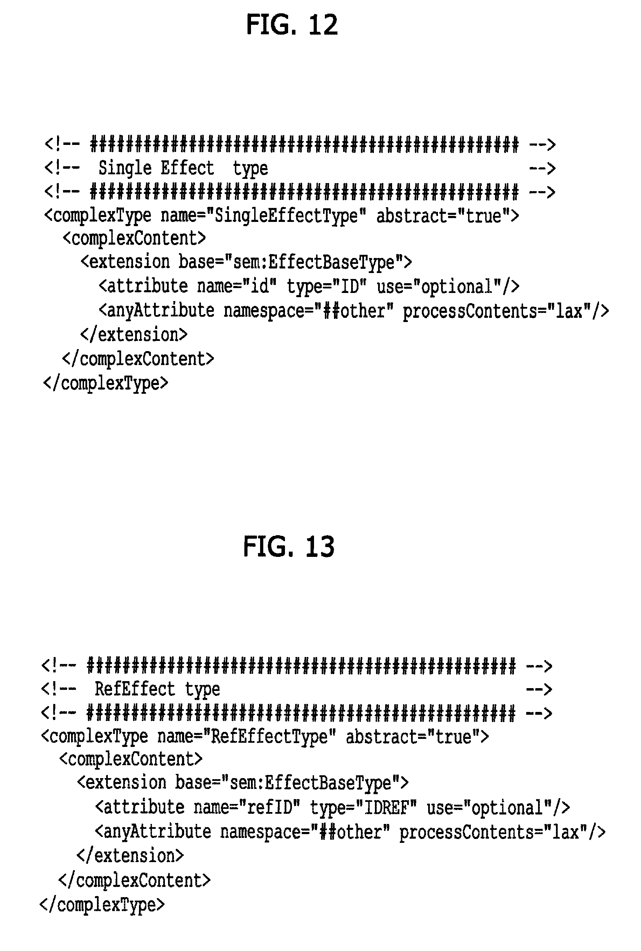

Fig. 12 shows an example of schema for the single effect type in accordance with the embodiment of the present invention. In Fig. 12, the schema of the single effect type includes identification information (id) for identifying a defined single effect type. Table 8 summarizes the meanings of the vocabularies shown in Fig. 12.

**Table 8**

| Name | Definition |
|---|---|
| id | Identify singleeffectType |
| anyAttribute | Allow inclusion of attributes defined in namespace excluding target namespace |

Fig. 13 shows an example of schema for the reference effect type in accordance with the embodiment of the present invention. In Fig. 13, the schema of the reference effect type (RefEffect type) includes identification information (refID) describing a sensory effect which is already defined and referred to through Declaration. Table 9 summarizes the meanings of the vocabularies shown in Fig. 13.

**Table 9**

| Name | Definition |
|---|---|
| refId | Describe sensory effect which is already defined and referred to through Declaration |
| anyAttribute | Allow inclusion of attributes defined in namespace excluding target namespace |

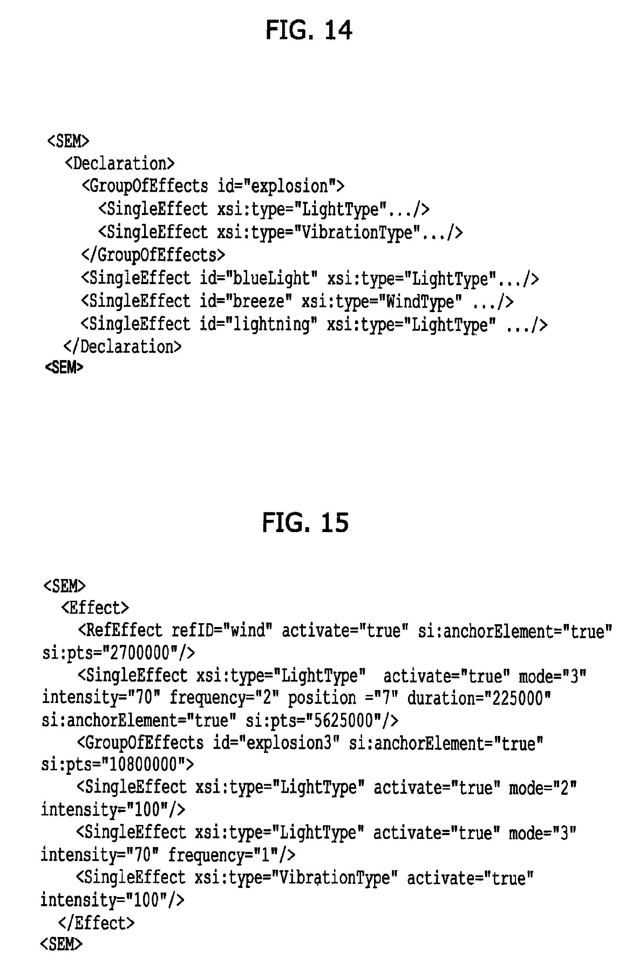

Fig. 14 shows an example of the sensory effect declaration information element in accordance with the embodiment of the present invention.

Referring to Fig. 14, the sensory effect declaration information describes the definition of group effect type or single effect type. In Fig. 14, an explosion effect as a group effect type is defined. The explosion effect is composed of two core sensory effect types, that is, a light effect type (LightType) and a vibration effect type (VibrationType). Furthermore, three single effect types including a blue light effect (blueLight), a breeze effect (breeze), and a lightning effect (lighting) are defined. The respective single effect types are described as the core sensory effect types such as the light effect type (LightType), a wind effect type (WindType) and so on.

Fig. 15 shows an example of the sensory effect representation information element in accordance with the embodiment of the present invention.

Fig. 15 shows an example of the sensory effect representation information element accompanying a single effect and a group effect for instant effect declaration. In Fig. 15, reference effect representation information (RefEffect) represents a corresponding sensory effect by referring to a wind effect (wind) which is already defined in the sensory effect declaration information (Declaration). That is, the reference effect representation information (RefEffect) is information for referring to an effect which is already defined through the sensory effect declaration information (Declaration). Furthermore, a light effect type (LightType) as a single effect is represented. Continuously, an explosion effect (explosion3) as a group effect and two light effect types and a vibration effect type (VibrationType) as single effects are represented.

Hereafter, core sensory effect vocabularies used in the embodiment of the present invention will be described in detail.

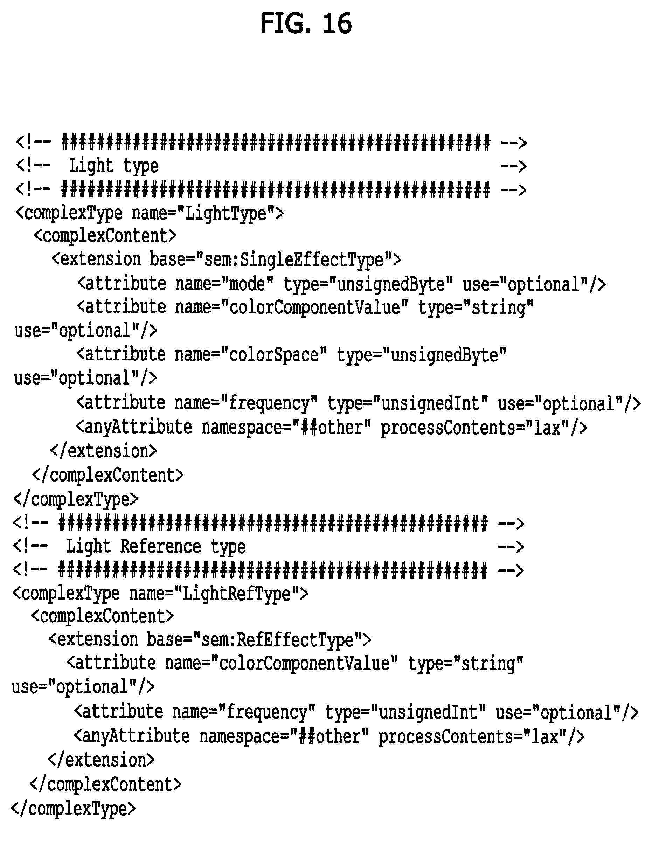

Fig. 16 shows an example of schema for a light effect.

Referring to Fig. 16, the light effect is defined as a light effect type (LightType) and a light effect reference type (LightRefType). Table 10 summarizes the meanings of the vocabularies used in Fig. 16.

**Table 10**

| Name | Definition |
|---|---|
| mode | Describe mode of light effect type. Available values are defined in Table 11. |
| colorComponentValue | Describe color component value. |
| colorSpace | Describe color space. Available values are defined in Table 12. |
| Frequency | Describe frequency of flash light by the unit of hz. For example, flash light flickers five times per second. |
| anyAttribute | Allow inclusion of attributes defined in namespace excluding target namespace |

**Table 11**

| Value | Definition |
|---|---|
| 1 | Binary light |
| 2 | Color light |
| 3 | Flash light |
| 4 | Dimming light |
| 5-64 | reserved |

**Table 12**

| Value | Definition |
|---|---|
| 1 | RGB |
| 2 | HSV |
| 3 | CIELAB |
| 4 | YCbCr |
| 5-64 | reserved |

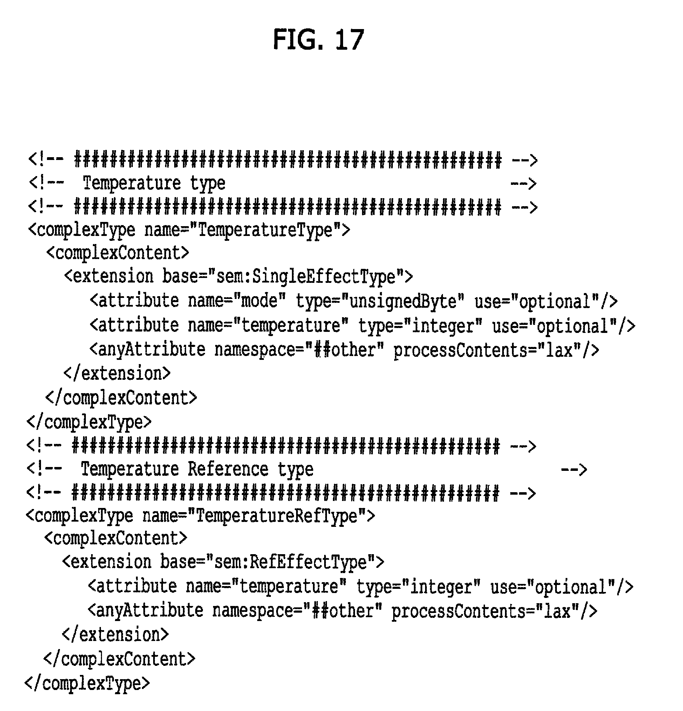

Fig. 17 shows an example of schema for a temperature effect.

Referring to Fig. 17, the temperature effect is defined as a temperature effect type (TemperatureType) and a temperature effect reference type (TemperatureRefType). Table 13 summarizes the meanings of the vocabularies used in Fig. 17.

**Table 13**

| Name | Definition |
|---|---|
| mode | Describe mode of temperature effect type. Available values are defined in Table 14. |
| temperature | Describe temperature by the unit of Celsius. |
| anyAttribute | Allow inclusion of attributes defined in namespace excluding target namespace. |

**Table 14**

| Value | Definition |
|---|---|
| 1 | Heating |
| 2 | Cooling |
| 3-64 | reserved |

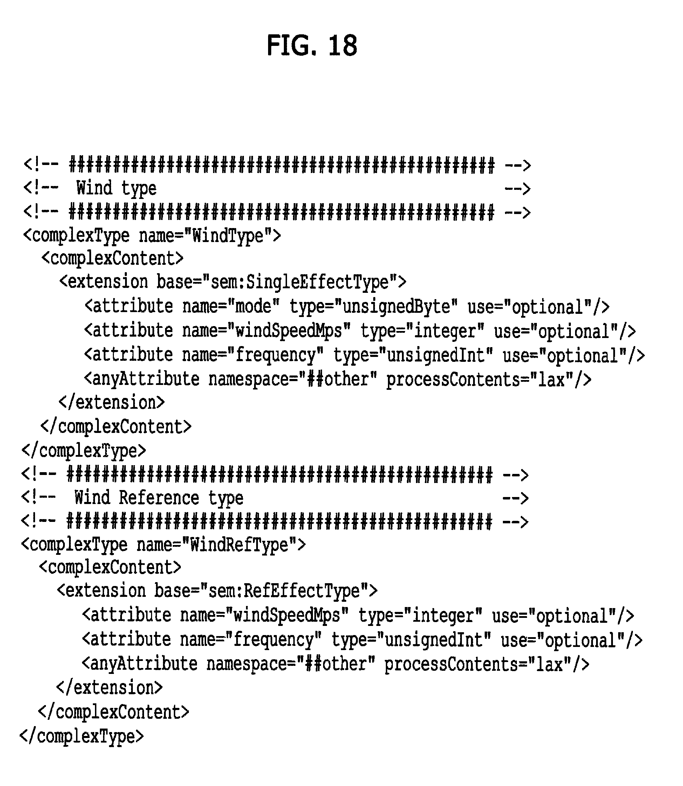

Fig. 18 shows an example of schema for a wind effect.

Referring to Fig. 18, the wind effect is defined as a wind effect type (WindType) and a wind effect reference type (WindRefType). Table 15 summarizes the meanings of the vocabularies used in Fig. 18.

**Table 15**

| Name | Definition |
|---|---|
| mode | Describe mode of wind effect type. Available values are defined in Table 16. |
| windSpeedMps | Describe wind speed by the unit of m/s. |
| frequency | Describe frequency of air-jet by the unit of hz. |
| anyAttribute | Allow inclusion of attributes defined in |
| namespace | excluding target namespace. |

**Table 16**

| Value | Definition |
|---|---|
| 1 | Fan |
| 2 | Air-jet |
| 3-64 | reserved |

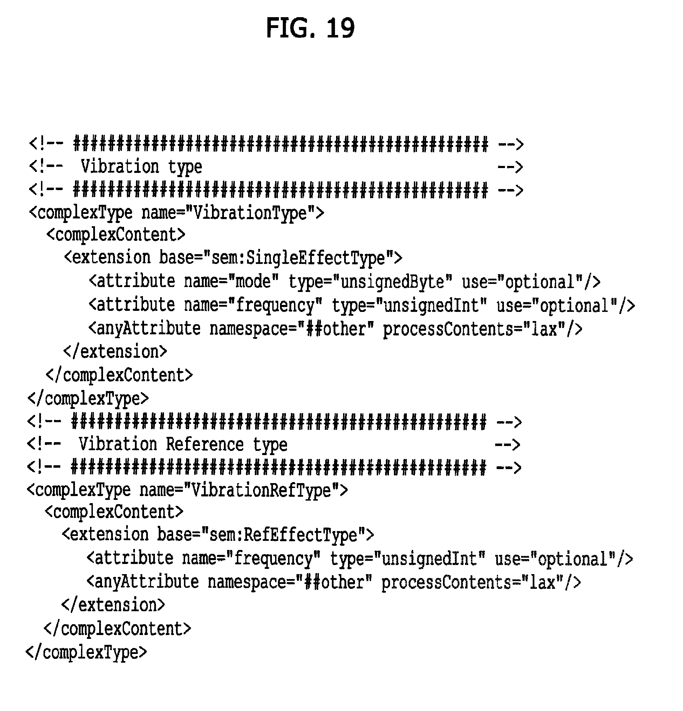

Fig. 19 shows an example of schema for a vibration effect.

Referring to Fig. 19, the vibration effect is defined as a vibration effect type (VibrationType) and a vibration effect reference type (VibrationRefType). Table 17 summarizes the meanings of the vocabularies used in Fig. 19.

**Table 17**

| Name | Definition |
|---|---|
| mode | Describe mode of vibration effect type. Available values are defined in Table 18. |
| frequency | Describe frequency of vibration effect by the unit of hz. |
| anyAttribute | Allow inclusion of attributes defined in namespace excluding target namespace. |

**Table 18**

| Value | Definition |
|---|---|
| 1 | Tactile |
| 2 | Chair |
| 3 | Floor |
| 4-64 | reserved |

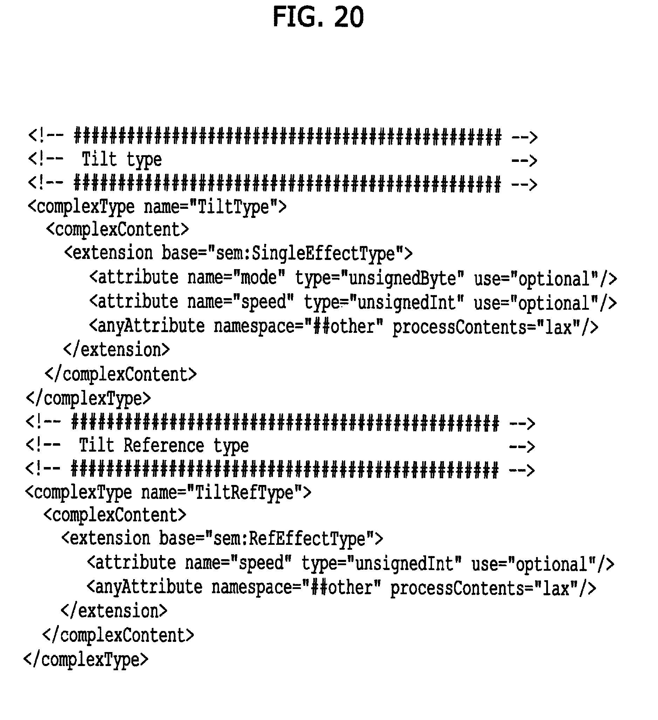

Fig. 20 shows an example of schema for a tilt effect.

Referring to Fig. 20, the tilt effect is defined as a tilt effect type (TiltType) and a tilt effect reference type (TiltRefType). Table 19 summarizes the meanings of the vocabularies used in Fig. 20.

**Table 19**

| Name | Definition |
|---|---|
| mode | Describe mode of tilt effect type. Available values are defined in Table 20. |
| frequency | Describe frequency of tilt effect by the unit of cm/s. |
| anyAttribute | Allow inclusion of attributes defined in namespace excluding target namespace. |

**Table 20**

| Value | Definition |
|---|---|
| 1 | Horizontal |
| 2 | Vertical |
| 3-64 | reserved |

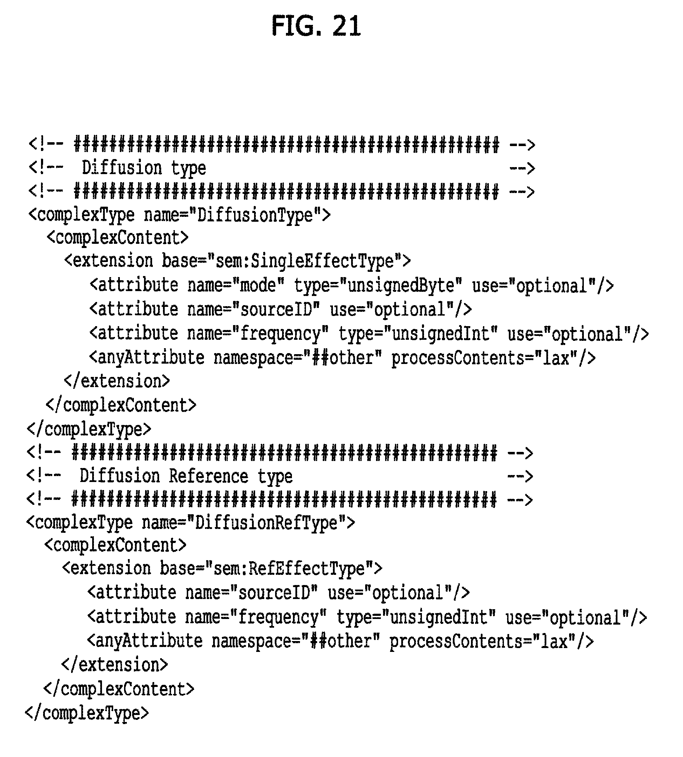

Fig. 21 shows an example of schema for a diffusion effect.

Referring to Fig. 21, the diffusion effect is defined as a diffusion effect type (DiffusionType) and a diffusion effect reference type (DiffusionRefType). Table 21 summarizes the meanings of the vocabularies used in Fig. 21.

**Table 21**

| Name | Definition |
|---|---|
| mode | Describe mode of diffusion effect type. Available values are defined in Table 22. |
| source | Describe source of diffusion. Available values are defined in Table 23. |
| frequency | Describe frequency of diffusion by the unit of hz. |
| anyAttribute | Allow inclusion of attributes defined in namespace excluding target namespace. |

**Table 22**

| Value | Definition |
|---|---|
| 1 | Spray |
| 2 | Injection |
| 3-64 | reserved |

**Table 23**

| Value | Definition |
|---|---|
| 1-999 | Reserved for scent |
| 1000-1999 | Reserved for smog |
| 2000-2999 | Reserved for water |
| 3000-3999 | Reserved |

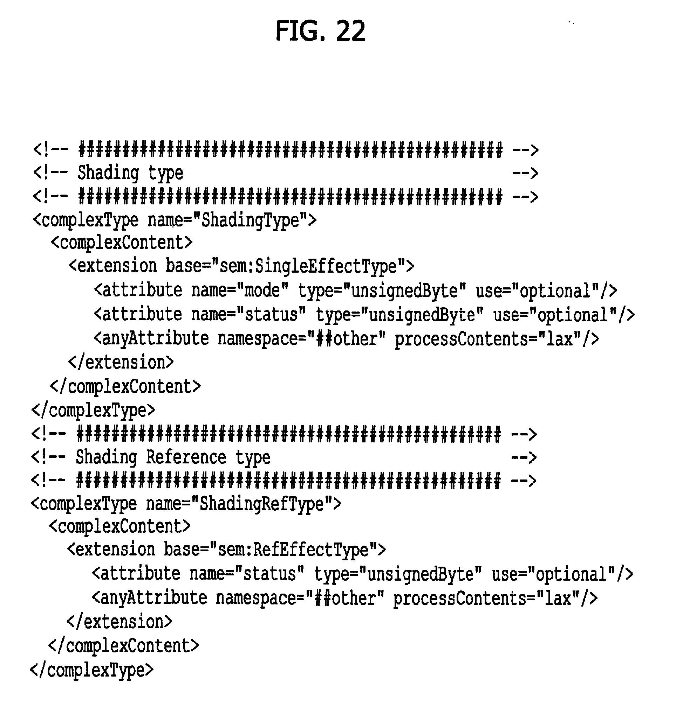

Fig. 22 shows an example of schema for a shading effect.

Referring to Fig. 22, the shading effect is defined as a shading effect type (ShadingType) and a shading effect reference type (ShadingTefType). Table 24 summarizes the meanings of vocabularies used in Fig. 22.

**Table 24**

| Name | Definition |
|---|---|
| mode | Describe mode of shading effect type. Available values are defined in Table 25. |
| status | Describe status of shading device. Available values are defined in Table 26. |
| anyAttribute | Allow inclusion of attributes defined in namespace excluding target namespace. |

**Table 25**

| Value | Definition |
|---|---|
| 1 | Door |
| 2 | Blind |
| 3 | Curtain |
| 4-64 | Reserved |

**Table 26**

| Value | Definition |
|---|---|
| 1 | Open |
| 2 | Close |
| 3-64 | Reserved |

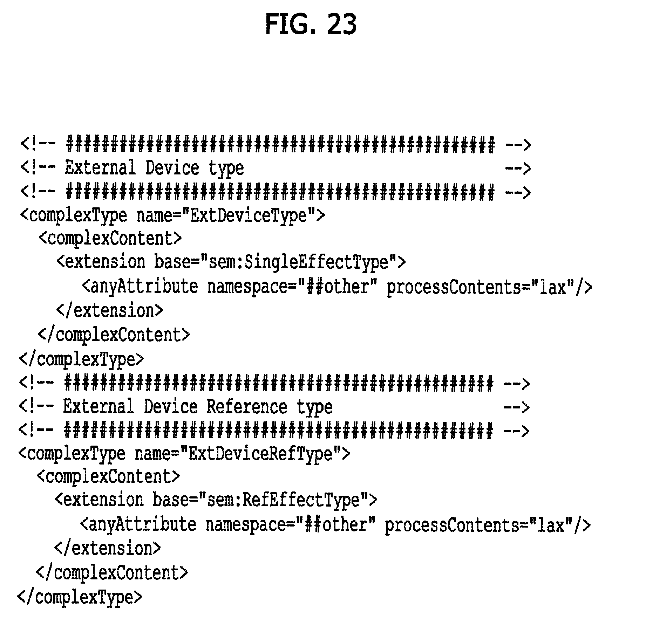

Fig. 23 shows an example of schema for an external device effect.

Referring to Fig. 23, the external device effect is defined as an external device effect (ExtDeviceType) and an external device effect reference type (ExtDeviceRefType), Table 27 summarizes the meanings of the vocabularies used in Fig. 23.

**Table 27**

| Name | Definition |
|---|---|
| anyAttribute | Allow inclusion of attributes defined in namespace excluding target namespace. |

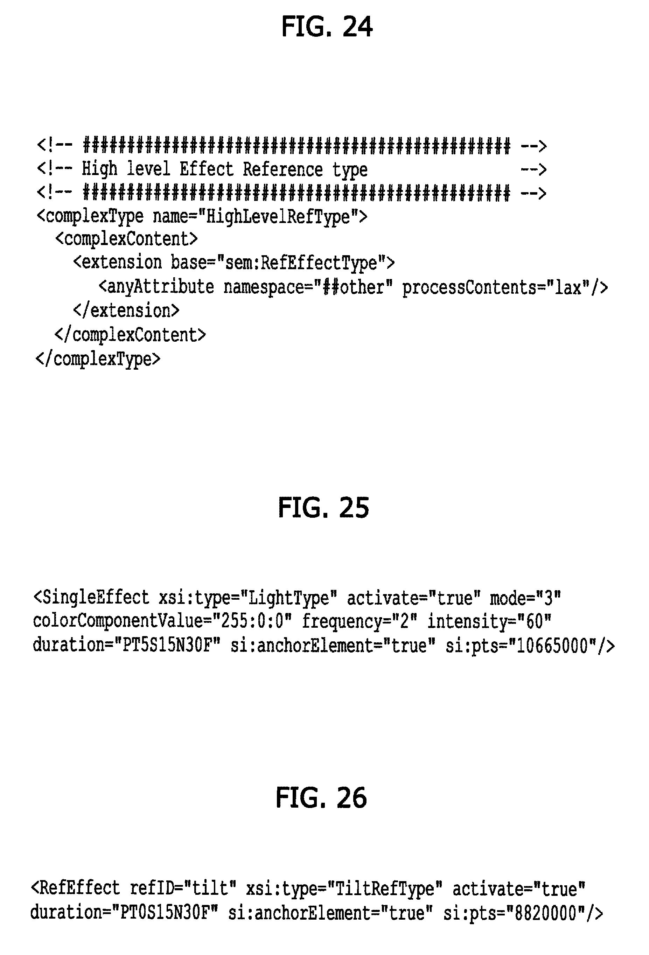

Fig. 24 shows an example of schema for a high level reference effect.

Referring to Fig. 24, the high level reference effect is defined as a high level reference effect type (HighLevelRefType). Table 28 summarizes the meanings of the vocabularies used in Fig. 24.

**Table 28**

| Name | Definition |
|---|---|
| anyAttribute | Allow inclusion of attributes defined in namespace excluding target namespace. |

Fig. 25 shows an example of the light effect type for a flash effect in accordance with the embodiment of the present invention.

In the example of Fig. 25, the flash effect is described by using the previously-described schema and definition. The flash effect is a single effect type (SingleEffect), and uses the light effect type (LightType). Furthermore, the flash effect is activated, the mode is defined as '3', the color component value is defined as '255:0:0', the frequency is defined as '2', the intensity is defined as '60', and the duration is defined as 'PT5S15N30F'.

Fig. 26 shows an example of the tilt effect type for representing a motion effect (for example, rocking chair).

Referring to Fig. 26, the motion effect refers to the predefined tilt effect type, and uses the tilt effect reference type (TiltRefType) for the reference. Furthermore, the motion effect is activated, and the duration is defined as 'PT0S15N30F'.

While the present invention has been described with respect to the specific embodiments, it will be apparent to those skilled in the art that various changes and modifications may be made without departing from the spirit and scope of the invention as defined in the following claims.

## Claims

1. A method for generating sensory media, comprising:
generating sensory effect metadata (SEM) for a sensory effect which is applied to media; and
outputting the SEM,
wherein the SEM comprises sensory effect declaration information defining a sensory effect type other than a core sensory effect type and sensory effect representation information for representing the sensory effect.

2. The method of claim 1, wherein the SEM further comprises reference information for referring to a sensory effect type defined in external or internal SEM.

3. The method of claim 1, wherein the sensory effect declaration information comprises group effect declaration information defining a group effect type or single effect declaration information defining a single effect type, and the group effect type is defined by using one or more single effect types.

4. The method of claim 3, wherein the sensory effect representation information comprises at least one of the core sensory effect type, the group effect type, and the single effect type.

5. The method of claim 1, wherein the core sensory effect type comprises a light effect type, a temperature effect type, a wind effect type, a vibration effect type, a tilt effect type, a diffusion effect type, a shading effect type, an external device effect type, and a high level reference effect type.

6. The method of claim 1, wherein attribute information applied to the sensory effect comprises position information, direction information, activation information, intensity information, level information, priority information, duration information, fading time information, alternative effect information, adaptability information, and mandatory information.

7. An apparatus for generating sensory media, comprising:
a metadata generating unit configured to generate sensory effect metadata (SEM) for a sensory effect which is applied to media; and
an output unit configured to output the SEM,
wherein the SEM comprises sensory effect declaration information defining a sensory effect type other than a core sensory effect type and sensory effect representation information for representing the sensory effect.

8. The apparatus of claim 7, wherein the SEM comprises reference information for referring to a sensory effect type defined in external or internal SEM.

9. The apparatus of claim 7, wherein the sensory effect declaration information comprises group effect declaration information defining a group effect type or single effect declaration information defining a single effect type, and the group effect type is defined by using one or more single effect types.

10. The apparatus of claim 9, wherein the sensory effect representation information comprises at least one of the core sensory effect type, the group effect type, and the single effect type.

11. A method for representing sensory media, comprising:
receiving sensory effect metadata (SEM) for a sensory effect which is applied to media; and
acquiring information on the sensory effect by using the SEM, and controlling a sensory device to represent the sensory effect,
wherein the SEM comprises sensory effect declaration information defining a sensory effect type other than a core sensory effect type and sensory effect representation information for representing the sensory effect.

12. The method of claim 11, wherein the SEM comprises reference information for referring to a sensory effect type defined in external or internal SEM.

13. The method of claim 11, wherein the sensory effect declaration information comprises group effect declaration information defining a group effect type or single effect declaration information defining a single effect type, and the group effect type is defined by using one or single effect types.

14. The method of claim 13, wherein the sensory effect representation information comprises at least one of the core sensory effect type, the group effect type, and the single effect type.

15. An apparatus for representing sensory media, comprising:
an input unit configured to receive sensory effect metadata (SEM) for a sensory effect which is applied to media; and
a control unit configured to acquire information on the sensory effect using the SEM, and control a sensory device to represent the sensory effect,
wherein the SEM comprises sensory effect declaration information defining a sensory effect type other than a core sensory effect type and sensory effect representation information for representing the sensory effect.
